# EUROPÄISCHE PATENTSCHRIFT

(11) **EP 2 463 459 B1**
(45) Veröffentlichungstag und Bekanntmachung des Hinweises auf die Patenterteilung: **25.09.2013**
(21) Anmeldenummer: 10015517.5
(22) Anmeldetag: 10.12.2010
(51) Int. Cl.: E05B 47/00, F16B 21/16, F16B 41/00, F16B 1/00

(54) **Schließknopf und Magnetschlüssel für ein Magnetschloss**
Closing button and magnetic key for a magnetic lock
Bouton de fermeture et clé magnétique pour une serrure magnétique

(43) Veröffentlichungstag der Anmeldung: 13.06.2012
(73) Patentinhaber: Wysozki, Roman, 22763 Hamburg (DE); Sànchez, Alexander, 21266 Jesteburg (DE)
(72) Erfinder: Wysozki, Roman, 22763 Hamburg (DE); Sànchez, Alexander, 21266 Jesteburg (DE)
(74) Vertreter: Hauck Patent- und Rechtsanwälte

(56) Entgegenhaltungen:
- US-A- 3 638 285
- US-A- 5 600 977
- US-A1- 2008 143 030

## Beschreibung

Die Erfindung betrifft einen Schließknopf für ein mit einem Magnetschlüssel zu öffnendes Magnetschloss, einen Magnetschlüssel für ein einen Schließknopf aufweisendes Magnetschloss und ein System mit einem solchen Schließknopf und einem solchen Magnetschlüssel.

Magnetschlösser der hier betrachteten Art weisen einen Schließknopf auf und ein mit dem Schließknopf zusammenwirkendes Teil, insbesondere einen Sockel mit einem Teller und einem daran befestigtem Schaft, der in eine Aufnahme des Schließknopfs eingesetzt werden kann. Mit einem Magnetschlüssel kann der Schließknopf wieder von dem Schaft entfernt werden. Der Schaft kann beispielsweise durch eine Öse an einem Ende einer Fixierbandage hindurchgeführt werden, wobei der Teller des Sockels vorzugsweise in einer im Bereich der Öse angeordneten Tasche gehalten wird. Um die Fixierbandage zu schließen, wird eine weitere Öse ebenfalls auf den Schaft aufgesteckt. Anschließend wird der Schließknopf aufgesetzt und die Fixierbandage dadurch in ihrer geschlossenen Stellung fixiert. Derartige Bandagen werden beispielsweise zur Fixierung verwirrter oder unkooperativer Patienten eingesetzt.

Ein einfaches Magnetschloss dieser Art ist aus der deutschen Offenlegungsschrift Nr. 1 942 535 bekannt geworden. Es weist einen Schließknopf mit zwei gegenüberliegenden Verriegelungselementen auf, die von einem an eine Stirnseite des Schließknopfs anzusetzenden Magnetschlüssel, der einen Magneten enthält, in eine Öffnungsstellung verlagert werden können. Dabei werden durch die magnetischen Kräfte magnetische Elemente in dem Schließknopf im Wesentlichen in linearer Richtung bewegt und bringen dabei die Verriegelungselemente in ihre Öffnungsstellung. Nachteilig an diesen bekannten Magnetschlössern ist, dass sie relativ einfach mit beliebigen Magneten ausreichender Stärke geöffnet werden können. Sie reagieren auch auf Stöße oder Schläge, sodass ein unbefugtes Entfernen des Schließknopfs von dem Sockel relativ einfach möglich ist.

Ein anderes Magnetschloss ist aus der europäischen Patentschrift EP 1 355 550 B1 bekannt geworden. Dieses weist einen Schließknopf auf, in dem ein Magnet um eine Drehachse drehbar gelagert ist. Der Magnet ist über eine drehbare Scheibe, die Mitnehmer aufweist, mit Verriegelungselementen gekoppelt. Jedes der Verriegelungselemente wird von einer Feder in eine Verriegelungsstellung vorgespannt. Durch Drehen des Magneten um die Drehachse werden die Verriegelungselemente in eine Öffnungsstellung verlagert. Um diesen bekannten Schließknopf zu öffnen, wird ein Magnetschlüssel auf den Schließknopf aufgesetzt. Der Magnetschlüssel enthält mehrere Magnete, die ein magnetisches Feld mit auf einem Kreis um eine Längsachse des Magnetschlüssels variierender Feldstärke erzeugen. Dadurch ist es möglich, durch Drehen des Magnetschlüssels ein Drehmoment auf den in dem Schließknopf angeordneten Magneten auszuüben, um diesen zu drehen und die Verriegelungselemente in die Öffnungsstellung zu verlagern. Derartige Magnetschlösser bieten eine hohe Sicherheit gegen unbefugtes Öffnen, weil das für die Öffnung erforderliche Drehmoment mit herkömmlichen Magneten nicht ohne Weiteres erzeugt werden können und weil auch durch Schläge oder Stöße auf den Schließknopf in aller Regel keine Drehung des in dem Schließknopf angeordneten Magneten bewirkt werden kann. Allerdings ist das Öffnen auch bei Verwendung des passenden Magnetschlüssels schwieriger als bei den vorstehend erläuterten, einfacheren Magnetschlössem, weil der Magnetschlüssel gezielt relativ zu dem Schließknopf gedreht werden muss. Um diese Bewegung überhaupt mit einer Hand ausführen zu können, ist bei dem bekannten Magnetschloss eine Verdrehsicherung des Schließknopfs auf dem Schaft des Sockels sowie des Sockels gegenüber dem Gurt vorgesehen, was wiederum eine relativ aufwendige Konstruktion erfordert.

Davon ausgehend ist es die Aufgabe der Erfindung, einen Schließknopf für ein mit einem Magnetschlüssel zu öffnendes Magnetschloss und einen Magnetschlüssel für ein einen Schließknopf aufweisendes Magnetschloss zur Verfügung zu stellen, das eine hohe Sicherheit gegen unbefugtes Öffnen bietet und gleichzeitig einfacher zu öffnen ist.

Diese Aufgabe wird gelöst durch den Schließknopf für ein mit einem Magnetschlüssel zu öffnendes Magnetschloss mit den Merkmalen des Anspruchs 1. Vorteilhafte Ausgestaltungen sind in den sich anschließenden Unteransprüchen angegeben.

Der Schließknopf hat
- mindestens einen ersten Magneten, der um eine Drehachse drehbar in dem Schließknopf gelagert ist, und
- mindestens ein Verriegelungselement, das mit dem mindestens einen ersten Magneten gekoppelt ist, sodass es durch Drehen des mindestens einen ersten Magneten um die Drehachse von einer Verriegelungsstellung in eine Öffnungsstellung beweglich ist, wobei
- der Schießknopf erste Führungsmittel aufweist, die so ausgebildet sind, dass sie, wenn ein zu dem Schließknopf passender, zweite Führungsmittel aufweisender Magnetschlüssel entlang der Drehachse bis in eine Endstellung an den Schließknopf herangeführt wird, den Magnetschlüssel und den Schließknopf in eine vorgegebene Drehstellung bezüglich der Drehachse relativ zueinander führen.

Der Schließknopf kann ein Gehäuse aufweisen, insbesondere aus Kunststoff, Messing oder einem anderen, nicht-magnetischen Material. Der Schließknopf kann eine im Wesentlichen kreisscheibenförmige Grundform aufweisen. Der Schließknopf kann eine Aufnahme für den Schaft eines Sockels aufweisen, die beispielsweise mittig in einer flachen Unterseite des Schließknopfs ausgebildet ist.

In dem Schließknopf befindet sich ein Hohlraum, in dem der mindestens eine erste Magnet angeordnet ist. Es können auch zwei oder mehr, insbesondere vier erste Magnete vorhanden sein oder ein einziger erster Magnet, der unterschiedlich polarisierte Abschnitte aufweist. Der mindestens eine erste Magnet ist um eine Drehachse drehbar in dem Schließknopf gelagert. Zu diesem Zweck kann der erste Magnet beispielsweise scheibenförmig ausgebildet oder an einem scheibenförmigen Drehkörper befestigt sein. Der Magnet oder der Drehkörper können mit Hilfe einer mittig angeordneten Achse drehbar gelagert sein. Alternativ kann der erste Magnet bzw. der Drehkörper an einem anderen Ort, beispielsweise an seinem äußeren Umfang, gelagert sein.

Der Schließknopf hat mindestens ein Verriegelungselement, das von einer Verriegelungsstellung in eine Öffnungsstellung beweglich ist. Das mindestens eine Verriegelungselement kann beispielsweise ein streifen- oder scheibenförmiger Körper oder ein Plättchen sein, das im Wesentlichen senkrecht zu der Drehachse beweglich ist. Das mindestens eine Verriegelungselement kann insbesondere seitlich von einer Aufnahme für einen Schaft angeordnet sein und in seiner Verriegelungsstellung in die Aufnahme hineinragen, um in Eingriff mit einer Rille oder einer sonstigen Vertiefung in einem in die Aufnahme eingesetzten Schaft zu gelangen oder einen Vorsprung an dem Schaft zu hintergreifen und so ein Herausziehen des Schafts aus der Aufnahme zu verhindern.

Das mindestens eine Verriegelungselement ist dabei mit dem mindestens einen ersten Magneten gekoppelt, sodass durch Drehen des ersten Magneten das mindestens eine Verriegelungselement in seine Öffnungsstellung gebracht werden kann. Für die Kopplung kann beispielsweise eine drehbare Scheibe Verwendung finden, die drehfest mit dem Magneten verbunden ist und an einer dem Magneten gegenüberliegenden Seite Mitnehmer aufweist, die bei einer Drehung der Scheibe das mindestens eine Verriegelungselement aus seiner Verriegelungsstellung heraus in die Öffnungsstellung bewegen. Mögliche Anordnungen eines ersten, drehbar gelagerten Magneten und eines damit zusammenwirkenden Verriegelungselements sind aus der eingangs zitierten Druckschrift EP 1 355 550 B1 bekannt und können bei der Erfindung verwendet werden.

Bei der Erfindung weist der Schließknopf erste Führungsmittel auf, die mit zweiten Führungsmitteln an einem zu dem Schließknopf passenden Magnetschlüssel zusammenwirken, wenn der Magnetschlüssel entlang der Drehachse des Schließknopfs bis in eine Endstellung an den Schließknopf herangeführt wird. Dadurch gelangen Schließknopf und Magnetschlüssel automatisch, d.h. ohne dass gezielt eine Drehbewegung des Magnetschlüssels oder des Schließknopfs von Hand ausgeführt werden muss, in eine vorgegebene relative Drehstellung zueinander. Diese vorgegebene, relative Drehstellung bezieht sich dabei auf die Drehachse des Schließknopfs, d.h. es werden die Drehstellungen des Schließknopfs und des Magnetschlüssels jeweils bezüglich der Richtung der Drehachse betrachtet.

Die Erfindung beruht auf der überraschenden Erkenntnis, dass bei dem aus der Druckschrift EP 1 355 550 B1 bekannten Magnetschloss eine Drehung des Magnetschlüssels relativ zu dem Schließknopf nach dem Ansetzen des Magnetschlüssels an den Schließknopf nicht unbedingt erforderlich ist, um das Magnetschloss zu öffnen. Stattdessen ist es bei dem bekannten Magnetschloss möglich, eine Öffnung zu bewirken, indem der Magnetschlüssel bereits in einer vorgegebenen Drehstellung an den Schließknopf herangeführt wird. In diesem Fall bewirken die von dem Magnetschlüssel auf den in dem Schließknopf angeordneten Magneten wirkenden Kräfte eine Drehung des in dem Schließknopf angeordneten Magneten während des Heranführens bzw. mit dem Aufsetzen des Magnetschlüssels an einen bzw. auf einen Entriegelungspunkt des Schließknopfes. In der Praxis ist es bei dem bekannten Magnetschloss allerdings kaum möglich, den Magnetschlüssel in der erforderlichen Drehstellung an den Schließknopf heranzuführen, erstens, weil die für das Öffnen erforderliche Drehstellung nicht ohne Weiteres erkennbar ist, zweitens, weil die relativ starken magnetischen Kräfte den Magnetschlüssel relativ zu dem Schließknopf bevorzugt in eine relative Drehstellung bringen, in der gerade kein Öffnen erfolgt. Somit ergibt sich bei dem bekannten Magnetschloss der in der genannten Patentschrift beschriebene, vorgesehene Bewegungsablauf für das Öffnen, nämlich ein Ansetzen des Magnetschlüssels an den Schließknopf und eine nachfolgende, bewusst auszuführende Drehbewegung des Magnetschlüssels, beinahe zwangsläufig.

Um sich diese Erkenntnis für ein einfacheres Öffnen zunutze zu machen, sind bei der Erfindung erste Führungsmittel am Schließknopf vorgesehen, die in Verbindung mit zweiten Führungsmitteln an einem passenden Magnetschlüssel beim Annähern des Magnetschlüssels an den Schließknopf automatisch dazu führen, dass der Magnetschlüssel nach dem Heranführen an den Schließknopf bis in eine Endstellung in einer vorgegebenen Drehstellung relativ zu dem Schließknopf angeordnet ist. Die Annäherungsbewegung des Magnetschlüssels an den Schließknopf wird durch das Zusammenwirken der ersten und zweiten Führungsmittel in eine Drehbewegung "umgewandelt". Durch geeignete Anordnung der ersten Führungsmittel wird die vorgegebene Drehstellung bevorzugt so festgelegt, dass der mindestens eine erste Magnet in dem Schließknopf in eine Drehstellung gelangt, in der das mindestens eine Verriegelungselement von dem mindestens einen ersten Magneten über einen Kopplungsmechanismus in seine Öffnungsstellung bewegt wird. Dadurch kann der erfindungsgemäße Schließknopf sehr einfach durch "blindes" Heranführen des Magnetschlüssels an den Schließknopf geöffnet werden. Hierzu ist es weder erforderlich, bewusst den Magnetschlüssel in eine bestimmte Drehstellung zu bringen oder ihn beginnend mit einer bestimmten Drehstellung an den Schließknopf heranzuführen, noch nach dem Heranführen des Magnetschlüssels an den Schließknopf noch irgendeine Drehbewegung auszuführen. Insgesamt wird ein wesentlich einfacheres Öffnen des Magnetschlosses ermöglicht.

Die Endstellung kann beispielsweise von den zusammenwirkenden ersten und zweiten Führungsmitteln festgelegt sein oder von einem sonstigen Anschlag, der ein weiteres Heranführen des Magnetschlüssels an den Schließknopf verhindert. Ein solcher Anschlag kann beispielsweise von einer flachen Oberseite des Schließknopfs gebildet sein, der mit einer Stirnfläche des Magnetschlüssels in Anlage gelangt.

In einer Ausgestaltung weisen die ersten Führungsmittel mindestens eine erste Führungsfläche oder -kante auf, die mindestens einen Abschnitt aufweist, der in einem Abstand von der Drehachse angeordnet ist und eine die Drehachse einschließende Längsebene und eine senkrecht zur Drehachse angeordnete Querebene jeweils unter einem von 90° verschiedenen Winkel schneidet. Grundsätzlich können die ersten Führungsmittel eine beliebige Ausgestaltung aufweisen, die die gewünschte Manipulation der relativen Drehstellung bewirkt. Neben Führungsflächen oder - kanten sind insbesondere sonstige an korrespondierenden zweiten Führungsmitteln entlang gleitende Elemente wie Führungsstifte oder sonstige Führungskörper oder auf zusammenwirkenden Führungsmitteln abrollende Elemente wie Kugeln oder drehbar gelagerte Rollen denkbar. Die genannte erste Führungsfläche oder -kante kann auch mit derartigen zweiten Führungsmitteln zusammenwirken. Der mindestens eine Abschnitt der ersten Führungsfläche, der in der genannten Weise relativ zur Drehachse angeordnet ist, vermittelt beim Heranführen des Magnetschlüssels an den Schließknopf die gewünschte relative Drehbewegung. Hierzu kann er bevorzugt in einem Winkelbereich von 20° bis 70° gegenüber der Längsebene und/oder gegenüber der Querebene geneigt sein. Die beiden Schnittwinkel können gleich oder verschieden groß sein. Sie können abhängig von den zwischen Schließknopf und Magnetschlüssel auftretenden Reibungskräften so gewählt werden, dass die gewünschte Drehbewegung bei einem möglichst geringen Annäherungsweg an den Schließknopf leichtgängig vermittelt wird. Insbesondere sind die Schnittwinkel so gewählt, dass es beim Bewegen des Magnetschlüssels nicht zu einer Selbsthemmung kommt, d.h. dass die zusammenwirkenden Führungsmittel aneinander entlang gleiten können und nicht infolge der auftretenden Haftreibung blockieren.

Die erste Führungsfläche und/oder der in der beschriebenen Weise angeordnete Abschnitt der ersten Führungsfläche können insbesondere in einem gleichmäßigen Abstand von der Drehachse angeordnet sein. Die erste Führungsfläche kann beispielsweise die Form eines relativ schmalen Rings aufweisen und streifenförmig um die Drehachse umlaufend ausgebildet sein. Sie erstreckt sich dann von einem ersten Abstand von der Drehachse bis zu einem zweiten Abstand von der Drehachse, der geringfügig größer ist als der erste Abstand. Auch diese Erstreckung über einen bestimmten Abstandsbereich von der Drehachse wird als gleichmäßiger Abstand der ersten Führungsfläche von der Drehachse aufgefasst. Die Anordnung der ersten Führungsfläche oder -kante in gleichmäßigem Abstand von der Drehachse sorgt dafür, dass bei einer Drehbewegung des Schließknopfs relativ zu einem Magnetschlüssel die mit der mindestens einen ersten Führungsfläche oder -kante zusammenwirkenden zweiten Führungsmittel während der gesamten Drehbewegung gleichmäßig von der ersten Führungsfläche oder -kante geführt werden können.

In einer Ausgestaltung läuft die mindestens eine erste Führungsfläche oder -kante in Umfangsrichtung um die Drehachse wellenförmig um. Die mindestens eine Führungsfläche oder -kante kann vollständig um die Drehachse umlaufen, also einen Winkelbereich von 360° überstreichen, oder auch nur abschnittsweise, beispielsweise mit einem oder mehreren, sich jeweils über einen Winkel im Bereich von beispielsweise 30° bis 180° überstreichenden Umfangsabschnitten. Die Wellenform kann ganz oder abschnittsweise beispielsweise sinusförmig oder annähernd sinusförmig ausgebildet sein. Die wellenförmig umlaufenden Führungsfläche oder -kante kann ein oder mehrere Wellentäler aufweisen, die mit zweiten Führungsmitteln am Magnetschlüssel zusammenwirken können, wobei die zweiten Führungsmittel in der Endstellung in einem oder mehreren der Wellentäler angeordnet sein können. Eine wellenförmige Ausgestaltung der ersten Führungsfläche oder -kante begünstigt einen reibungslosen Bewegungsablauf beim Heranführen des Magnetschlüssels an den Schließknopf.

In einer Ausgestaltung weisen die ersten Führungsmittel erste Seitenflächen und/oder -kanten auf, die mindestens an einem Längsabschnitt des Schließknopfs mit vieleckigem Querschnitt ausgebildet sind. Der Querschnitt verläuft quer zur Drehachse und kann beispielsweise vier-, sechs- oder achteckig sein. Die Anzahl der Ecken kann insbesondere der Anzahl von relativen Drehstellungen von Schließknopf und Magnetschlüssel zueinander entsprechen, in denen der Schließknopf in der Endstellung öffnet. Die Ecken des vieleckigen Querschnitts können abgerundet sein. Die Kanten des vieleckigen Querschnitts können geradlinig sein oder auch leicht gekrümmt, insbesondere "tonnenförmig" nach außen. Die Seitenflächen sind seitlich der Drehachse angeordnete Flächen, die eine Kante des vieleckigen Querschnitts einschließen. Die Seitenflächen können eben sein und Flächennormalen in bezogen auf die Drehachse radialer Richtung aufweisen. Beispiele hierfür sind zylindrische Längsabschnitte mit vier- oder achteckiger Grundfläche oder mit sechseckiger Grundfläche, etwa in Form einer Sechskantmutter. Die Seitenflächen können auch gegenüber der Drehachse geneigt sein, so dass sie mit zunehmendem Abstand von einer unteren Seite des Schließknopfs, die insbesondere eine Aufnahme für einen Schaft aufweist, aufeinander zu laufen. Beispiele für vieleckige Längsabschnitte mit aufeinander zu laufenden Seitenflächen sind gerade Kegel oder Kegelstümpfe mit vieleckiger Grundfläche. Die Seitenflächen können auch gekrümmt sein, insbesondere so, dass sich der Längsabschnitt zu einer vorderen Fläche des Schließknopfs hin zunehmend verjüngt und/oder in eine vordere Fläche übergeht. Die Seitenkanten verlaufen entlang der gegebenenfalls abgerundeten Ecken des vieleckigen Querschnitts und können ebenfalls abgerundet sein. Sie können entsprechend den genannten Ausgestaltungen der Seitenflächen senkrecht zu einer Radialrichtung, d.h. parallel zur Drehachse, oder geneigt dazu oder auch gekrümmt verlaufen. In diesen Fällen können die Seitenkanten in einer Ebene verlaufen, in der auch die Drehachse liegt. Die Seitenkanten können auch gegenüber einer solchen Ebene geneigt, also windschief zur Drehachse, angeordnet sein. Insbesondere können die Seitenkanten wendelförmig auf einem Zylinder oder Konus umlaufen. Den genannten Varianten ist gemeinsam, dass die Führungswirkung über seitliche Flächen und/oder Kanten erreicht wird. Diese Flächen oder Kanten wirken mit einem passenden Magnetschlüssel zusammen, um die relative Drehbewegung zu bewirken.

In einer Ausgestaltung ist der Schließknopf mit einem Sockel kombiniert, der einen Teller und einen daran befestigten Schaft aufweist, dessen freies Ende in eine Aufnahme des Schließknopfs einsetzbar ist, wobei im eingesetzten Zustand das mindestens eine Verriegelungselement in seiner Verriegelungsposition in die Aufnahme hineinragt und ein Entfernen des Schließknopfs von dem Schaft verhindert, wobei der Schaft im eingesetzten Zustand gegenüber dem Schließknopf drehbar ist. Um die Drehbarkeit zu erreichen, können das freie Ende des Schafts oder der gesamte Schaft und/oder die Aufnahme des Schließknopfs einen kreisförmigen Querschnitt aufweisen. Das freie Ende des Schafts kann eine Rille oder eine sonstige Vertiefung auf weisen, in die das Verriegelungselement in seine Verriegelungsposition eingreift. Das freie Ende kann auch eine radialen, insbesondere pilzförmigen Vorsprung aufweisen, den das Verriegelungselement in seiner Verriegelungsposition hintergreift, wenn das freie Ende des Schafts in die Aufnahme des Schließknopfs eingesetzt ist. Durch die Drehbarkeit des Schießknopfs gegenüber dem Sockel ist eine Drehung des Magnetschlüssels in der Hand des Benutzers beim Heranführen des Magnetschlüssels an den Schließknopf nicht erforderlich. Stattdessen kann sich der Schließknopf auf dem Schaft drehen. Dies ermöglicht ein noch einfacheres Handhaben des Magnetschlüssels. Außerdem ist die Fertigung des Sockels und des Schließknopfs kostengünstiger möglich, als bei Verwirklichung einer Verdrehsicherung zwischen den beiden.

In einer Ausgestaltung ist der Schließknopf aus einem den mindestens einen ersten Magneten und das mindestens eine Verriegelungselement aufweisenden Grundkörper und einem damit verbundenen Bauteil zusammengesetzt, das die ersten Führungsmittel aufweist. Das verbundene Bauteil kann beispielsweise hülsen- oder becherförmig und beispielsweise aus Kunststoff gefertigt sein und die ersten Führungsmittel beispielsweise an einer Stirnseite eines zylindermantelförmigen Abschnitts aufweisen. In diesem Fall kann der Grundkörper einfach in das Bauteil eingesetzt werden, so dass eine Nachrüstung herkömmlicher Schließknöpfe mit erfindungsgemäßen ersten Führungsmitteln einfach möglich ist.

Die oben genannte Aufgabe wird ebenfalls gelöst durch den Magnetschlüssel für ein einen Schließknopf aufweisendes Magnetschloss mit den Merkmalen des Anspruchs 6. Vorteilhafte Ausgestaltungen sind in den sich anschließenden Unteransprüchen angegeben.

Der Magnetschlüssel hat
- mindestens einen zweiten Magneten, der so angeordnet ist, dass er ein magnetisches Feld mit auf einem Kreis um eine Längsachse des Magnetschlüssels variierender Feldstärke erzeugt, wobei
- der Magnetschlüssel zweite Führungsmittel aufweist, die so ausgebildet sind, dass sie, wenn der Magnetschlüssel bis in eine Endstellung an einen passenden, erste Führungsmittel aufweisenden Schließknopf entlang der Längsachse herangeführt wird, den Magnetschlüssel und den Schließknopf in eine vorgegebene Drehstellung bezüglich der Längsachse relativ zueinander fuhren.

Hinsichtlich der Merkmale des Magnetschlüssels wird auf die vorstehenden Erläuterungen des Schließknopfs verwiesen, die für entsprechende Elemente des Magnetschlüssels analog gelten. Die begriffliche Unterscheidung zwischen erstem und zweitem Magneten, ersten und zweiten Führungsmitteln usw. dient vorliegend lediglich einer eindeutigen Bezeichnung der betreffenden Elemente. Insbesondere ist bei der Erwähnung bestimmter zweiter Elemente nicht gemeint, dass zusätzlich erste Elemente vorhanden sein müssen. Stattdessen beziehen sich die als erste Elemente bezeichneten Komponenten stets auf den Schließknopf und die als zweite Elemente bezeichneten Komponenten stets auf den Magnetschlüssel.

Die beschriebene Anordnung des mindestens einen zweiten Magneten führt dazu, dass mit dem Magnetschlüssel ein Drehmoment um die Längsachse des Magnetschlüssels herum ausgeübt werden kann. Hierzu kann der zweite Magnet beispielsweise so angeordnet sein, dass seine Polarisationsrichtung unter einem Winkel zur Längsachse des Magnetschlüssels, insbesondere senkrecht dazu, angeordnet ist. Ebenfalls möglich ist eine Anordnung des mindestens einen zweiten Magneten in einem Abstand von der Längsachse in beliebiger Orientierung, auch mit einer parallel zur Längsachse ausgerichteten Polarisierung. Um das gewünschte Magnetfeld zu erzeugen, können auch mehrere zweite Magneten kombiniert werden, beispielsweise zwei oder vier über einen Umfang um die Längsachse verteilt angeordnete zweite Magneten, deren Polarisationsrichtungen unterschiedlich, insbesondere in entgegengesetzten Richtungen parallel zur Längsachse, angeordnet sind. Möglich ist auch die Verwendung eines einzigen zweiten Magneten mit unterschiedlich polarisierten Abschnitten, insbesondere mit zwei oder vier solchen Abschnitten.

Bei der Erfindung weist der Magnetschlüssel zweite Führungsmittel auf, die mit an einem passenden Schließknopf ausgebildeten ersten Führungsmitteln in der bereits in Verbindung mit dem Schließknopf erläuterten Art und Weise zusammenwirken, um ein den Schließknopf aufweisendes Magnetschloss besonders einfach öffnen zu können. Anders als der aus dem Stand der Technik bekannte Magnetschlüssel gelangt der Magnetschlüssel der Erfindung beim Heranführen an einen passenden Schließknopf automatisch aufgrund der zweiten Führungsmittel in eine relative Drehstellung zu dem Schließknopf, die zu einem Öffnen des Schließknopfs führt.

In einer Ausgestaltung weist der Magnetschlüssel einen Kopfabschnitt auf, der den mindestens einen zweiten Magneten enthält, und einen in Richtung der Längsachse verlaufenden Griffabschnitt, der gegenüber dem Kopfabschnitt drehbar gelagert ist und/oder einen geringeren Durchmesser als der Kopfabschnitt aufweist. Der Kopfabschnitt kann ebenfalls entlang der Längsachse ausgerichtet sein. Beide Varianten führen dazu, dass der für das Magnetfeld verantwortliche Kopfabschnitt des Magnetschlüssels beim Heranführen des Magnetschlüssels an einen Schließknopf besonders einfach gedreht werden kann. Bei der gegenüber dem Griffabschnitt drehbaren Lagerung kann der Magnetschlüssel dabei am Griffabschnitt festgehalten werden, sodass der Griffabschnitt seine Drehstellung nicht ändert und sich lediglich der Kopfabschnitt gegenüber dem Griffabschnitt und damit relativ zum Schließknopf verdreht. In der Ausgestaltung mit einem Griffabschnitt geringeren Durchmessers kann sich der gesamte Magnetschlüssel einschließlich des Griffabschnitts besonders einfach in der Hand des Benutzers drehen. Beide Varianten vereinfachen das Handhaben des Magnetschlüssels damit zusätzlich.

In weiteren Ausgestaltungen weisen die zweiten Führungsmittel mindestens eine zweite Führungsfläche oder -kante auf, die mindestens einen Abschnitt aufweist, der in einem Abstand von der Längsachse angeordnet ist und eine die Längsachse einschließende Längsebene und eine senkrecht zur Längsachse angeordnete Querebene jeweils unter einem von 90° verschiedenen Winkel schneidet. Gemäß einer weiteren Ausgestaltung läuft die mindestens eine zweite Führungsfläche oder - kante in Umfangsrichtung um die Längsachse wellenförmig um. In einer weiteren Ausgestaltung weisen die zweiten Führungsmittel zweite Seitenflächen und/oder - kanten auf, die an einem Innenumfang eines Schließknopf-Aufnahmeabschnitts des Magnetschlüssels mit mindestens in einem Längsabschnitt vieleckigem Querschnitt ausgebildet sind. Der Schließknopf-Aufnahmeabschnitt dient zur Aufnahme eines Schließknopfs. Hinsichtlich dieser Ausgestaltungen wird auf die vorstehenden Erläuterungen zu den entsprechend ausgestalteten ersten Führungsmitteln verwiesen. Diese gelten für die zweiten Führungsmittel analog, wobei die Längsachse des Magnetschlüssels an die Stelle der Drehachse des Schließknopfs tritt. Auch hinsichtlich der zweiten Seitenflächen und/oder -kanten gelten die Ausführungen zu den ersten Seitenflächen und/oder -kanten entsprechend, wobei die zweiten Seitenflächen und/oder -kanten nicht an einer Außenseite, sondern an einem Innenumfang ausgebildet sind, insbesondere abgestimmt auf erste Seitenflächen und/oder -kanten eines passenden Schließknopfs.

Die oben genannte Aufgabe wird ebenfalls gelöst durch ein System mit den Merkmalen des Anspruchs 11. Vorteilhafte Ausgestaltungen sind in den sich anschließenden Unteransprüchen angegeben.

Das System hat
- einen Schließknopf, der mindestens einen ersten Magneten, der um eine Drehachse drehbar in dem Schließknopf gelagert ist, und mindestens ein Verriegelungselement aufweist, das mit dem mindestens einen ersten Magneten gekoppelt ist, so dass es durch Drehen des mindestens einen ersten Magneten um die Drehachse von einer Verriegelungsstellung in eine Öffnungsstellung beweglich ist, und
- einen Magnetschlüssel, der mindestens einen zweiten Magneten aufweist, der so angeordnet ist, das er ein magnetisches Feld mit auf einem Kreis um eine Längsachse des Magnetschlüssels variierender Feldstärke erzeugt, wobei
- der Schließknopf erste Führungsmittel und der Magnetschlüssel zweite Führungsmittel aufweist, wobei die ersten Führungsmittel und die zweiten Führungsmittel so ausgebildet sind, dass sie, wenn der Magnetschlüssel entlang der Längsachse bis in eine Endstellung an den Schließknopf herangeführt wird, den Magnetschlüssel und den Schließknopf in eine vorgegebene Drehstellung bezüglich der Längsachse relativ zueinander führen.

Mit anderen Worten umfasst das System im Wesentlichen einen erfindungsgemäßen Schließknopf mit den Merkmalen des Anspruchs 1 und einen erfindungsgemäßen Magnetschlüssel mit den Merkmalen des Anspruchs 6. Die ersten Führungsmittel des Schießknopfs und die zweiten Führungsschlüssel des Magnetschlüssels wirken in der bereits in Verbindung mit dem Schließknopf bzw. dem Magnetschlüssel erläuterten Weise zusammen, um das Öffnen eines mit dem Schließknopf ausgerüsteten Magnetschlosses zu vereinfachen. Auf die vorstehenden Erläuterungen der gleichlautenden Merkmale wird verwiesen.

In einer Ausgestaltung sind die ersten Führungsmittel und/oder die zweiten Führungsmittel so ausgebildet, dass sie einen Mittelpunkt des vorderen Endes des Magnetschlüssels bei der Bewegung in die Endstellung zur Drehachse des Schließknopfs hinführen. Der Mittelpunkt des vorderen Endes des Magnetschlüssels kann insbesondere auf einer Symmetrieachse des Magnetschlüssels angeordnet sein. Durch die genannte Ausgestaltung der Führungsmittel sorgen diese nicht nur für die gewünschte vorgegebene relative Drehstellung zwischen Magnetschlüssel und Schließknopf, sondern richten den Magnetschlüssel auch seitlich relativ zum Schließknopf aus. Dadurch liegt der Magnetschlüssel in der Endstellung insbesondere mittig an dem Schließknopf an. Dies führt zu einem besonders zuverlässigen Öffnen des Schließknopfs und begünstigt zudem die erwünschte Führungswirkung in die vorgegebene relative Drehstellung. In der Praxis erreicht werden kann die beschriebene zusätzliche Führungswirkung zum Beispiel durch einen sich mit zunehmendem Abstand von einer unteren Fläche des Schließknopfs, die insbesondere eine Aufnahme für einen Schaft aufweist, verjüngenden Abschnitt des Schließknopfs und/oder durch einen komplementär geformten Aufnahmeabschnitt eines Magnetschlüssels.

In einer Ausgestaltung sind die ersten Führungsmittel und/oder die zweiten Führungsmittel so ausgebildet, dass sie die Längsachse bei der Bewegung in die Endstellung parallel zu der Drehachse ausrichten. Dadurch wird die Endstellung des Magnetschlüssels relativ zu dem Schließknopf vollends festgelegt, was ein zuverlässiges Öffnen des Schließknopfs weiter begünstigt. Ein Ausrichten der Längsachsen kann beispielsweise durch einen Schließknopf mit einer bestimmten Form und einen zumindest abschnittsweise komplementär zu dieser bestimmten Form ausgebildeten Schließknopf-Aufnahmeabschnitt in dem Magnetschlüssel erzielt werden.

In einer Ausgestaltung ist mindestens eine Drehstellung von Schließknopf und Magnetschlüssel bezüglich der Längsachse relativ zu einander energetisch bevorzugt, wenn Schließknopf und Magnetschlüssel entlang der Längsachse ausgerichtet sind und sich ein einem Abstand voneinander befinden, und die ersten und zweiten Führungsmittel sind so aufeinander abgestimmt, dass sie ausgehend von dieser energetisch bevorzugten relativen Drehstellung beim Heranführen des Magnetschlüssels an den Schließknopf eine Drehung von Magnetschlüssel und Schließknopf relativ zueinander bewirken. Die mindestens eine energetisch bevorzugte Drehstellung ergibt sich aus den Anordnungen des mindestens einen ersten und des mindestens einen zweiten Magneten. Durch die magnetischen Kräfte gelangen Magnetschlüssel und Schließknopf bevorzugt in diese relative Drehstellung. Dies gilt insbesondere, wenn der Schließknopf oder ein Kopfabschnitt des Magnetschlüssels frei drehbar gelagert ist. In diesem Fall richten sich Magnetschlüssel und Schließknopf beim Annähern aneinander von selbst entsprechend der energetisch bevorzugten Drehstellung aus.

Da zum Öffnen des Schließknopfs in der Endstellung ein Drehmoment übertragen werden muss, entspricht diese energetisch bevorzugte Drehstellung in der Regel gerade nicht einer vorgegebenen Drehstellung, die in der Endstellung durch die Führungswirkung eingenommen werden soll. Demnach muss beim weiteren Heranführen des Magnetschlüssels an den Schließknopf eine Drehung bewirkt werden. Bei der beschriebenen Ausgestaltung sind die ersten und zweiten Führungsmittel so aufeinander abgestimmt, dass diese Führung insbesondere ausgehend von der energetisch bevorzugten Stellung zuverlässig erreicht wird. Die besondere Abstimmung der ersten und zweiten Führungsflächen aufeinander kann beispielsweise darin bestehen, dass eine wellenförmig umlaufende erste Führungsfläche oder -kante so angeordnet ist, dass in der energetisch bevorzugten relativen Drehstellung nicht gerade ein erster Wellenberg einem zweiten Wellenberg oder einer sonstigen Erhebung eines mit der ersten Führungsfläche oder -kante zusammenwirkenden Führungsmittels gegenüberliegt (oder umgekehrt), was zu einer Blockade führen könnte. Stattdessen kann insbesondere mindestens ein geneigter Abschnitt der ersten Führungsfläche (der zum Beispiel gemäß Anspruch 2 ausgestaltet sein kann) so angeordnet werden, dass er in der energetisch bevorzugten relativen Drehstellung einem damit zusammenwirkenden zweiten Führungsmittel gegenüberliegt (oder umgekehrt), so dass eine weitere Annäherungsbewegung automatisch in eine Drehbewegung umgesetzt wird, ohne dass es zu einer Selbsthemmung kommt.

In einer Ausgestaltung sind die ersten Führungsmittel und/oder die zweiten Führungsmittel so ausgebildet, dass sie den Magnetschlüssel und den Schließknopf in eine von mehreren vorgegebenen Drehstellungen führen, in der sich das mindestens eine Verriegelungselement in seine Öffnungsstellung bewegt. Diese Ausgestaltung berücksichtigt, dass abhängig von der gegebenen Anordnung des mindestens einen ersten und des mindestens einen zweiten Magneten ein Öffnen des Schließknopfs in mehr als einer relativen Drehstellung zueinander möglich ist. Beispielsweise können eine erste und eine zweite relative Drehstellung um 180° zueinander versetzt sein. Möglich sind auch Anordnungen der ersten und zweiten Magneten, die zu 3, 4 oder mehr voneinander verschiedenen definierten Drehstellungen führen, in denen der Schließknopf geöffnet wird. Gemäß der genannten Ausgestaltung werden bevorzugt alle zu einem Öffnen des Schließknopfs führenden relativen Drehstellungen berücksichtigt. Hierzu sind die ersten Führungsmittel und/oder die zweiten Führungsmittel so ausgebildet, dass Magnetschlüssel und Schließknopf immer in einer der vorgegebenen relativen Drehstellungen zueinander angeordnet sind, wenn der Magnetschlüssel bis in die Endstellung an den Schließknopf herangeführt worden ist. In welche der vorgegebenen Drehstellungen Magnetschlüssel und Schließknopf relativ zueinander gelangen, kann insbesondere von der relativen Anordnung von Magnetschlüssel und Schließknopf vor dem Unterschreiten eines Mindestabstands abhängig sein, ab dem die ersten und zweiten Führungsmittel zusammenwirken.

In einer Ausgestaltung befinden sich die mehreren vorgegebenen Drehstellungen in gleichmäßigen Winkelabständen. Dies kann durch geeignete Anordnung der ersten und zweiten Magneten erreicht werden, wobei geeignete Anordnungen unter anderem experimentell ermittelt werden können. Die genannte Ausgestaltung ermöglicht eine besonders einfache, symmetrische Ausgestaltung der ersten Führungsmittel und/oder der zweiten Führungsmittel. Außerdem gibt es einen relativ geringen maximalen Drehwinkel, um den die relative Drehstellung von Magnetschlüssel und Schließknopf während des Heranführens des Magnetschlüssels an den Schließknopf durch die ersten Führungsmittel und/oder die zweiten Führungsmittel bewegt werden muss. Dies vereinfacht die Handhabung des Magnetschlüssels zusätzlich.

In einer Ausgestaltung weisen die ersten Führungsmittel eine wellenförmig um die Drehachse des Schließknopfs umlaufende erste Führungsfläche oder -kante mit mindestens einem ersten Wellenberg und mindestens einem ersten Wellental und die zweiten Führungsmittel eine wellenförmig um eine Längsachse des Magnetschlüssels umlaufende zweite Führungsfläche oder -kante mit mindestens einem zweiten Wellenberg und mindestens einem zweiten Wellental auf, wobei in der vorgegebenen Drehstellung das mindestens eine erste Wellental dem mindestens einen zweiten Wellental und der mindestens eine erste Wellenberg dem mindestens einen zweiten Wellental gegenüberliegt. Diese Ausgestaltung führt zu einem besonders leichtgängigen Zusammenwirken der ersten und zweiten Führungsmittel und außerdem zu einem ansprechenden Erscheinungsbild von Schließknopf und Magnetschlüssel.

Es versteht sich, dass der für das System verwendete Schließknopf und der für das System verwendete Magnetschlüssel insbesondere gemäß einer der im Zusammenhang mit dem Schließknopf bzw. dem Magnetschlüssel erläuterten Ausgestaltungen ausgebildet sein kann. Insbesondere können die ersten Führungsmittel gemäß einem der Ansprüche 2 bis 4 und/oder die zweiten Führungsmittel gemäß einem der Ansprüche 8 bis 10 ausgebildet sein.

Die Erfindung wird nachfolgend anhand eines in Figuren dargestellten Ausführungsbeispiels näher läutert. Es zeigen:
- Fig. 1: einen Schließknopf auf einem Sockel und einen Magnetschlüssel in einer von dem Schließknopf beabstandeten Position in einer vereinfachten Ansicht von der Seite,
- Fig. 2: den Schließknopf mit Sockel und den Magnetschlüssel aus Figur 1 nach dem Heranführen des Magnetschlüssels an den Schließknopf bis in eine Endstellung in einer vereinfachten Ansicht von der Seite,
- Fig. 3: einen für den erfindungsgemäßen Schließknopf geeigneten Sockel in einer Ansicht von der Seite,
- Fig. 4: den Schließknopf aus Figuren 1 und 2 in einer Ansicht von unten,
- Fig. 5: eine Hülse mit ersten Führungsmitteln zur Nachrüstung eines herkömmlichen Schließknopfs gemäß der Erfindung,
- Fig. 6: eine Hülse mit zweiten Führungsmitteln zur Nachrüstung eines herkömmlichen Magnetschlüssels gemäß der Erfindung,
- Fig. 7: einen Schließknopf mit erste Führungsmittel bildenden Seitenflächen und -kanten in unterschiedlichen, vereinfachten Ansichten.

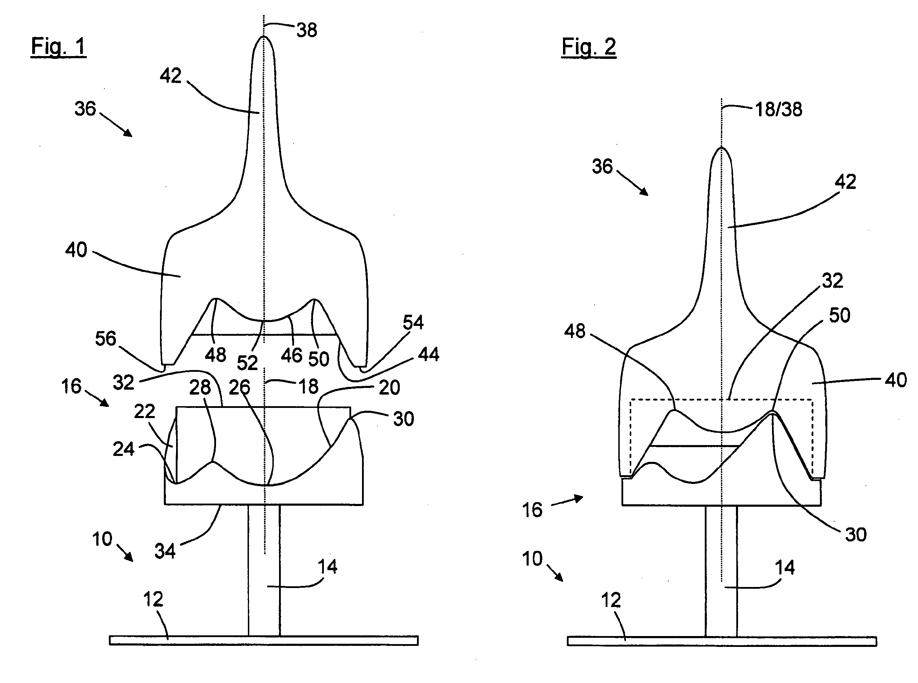

Figur 1 zeigt einen Sockel 10, der aus einem Teller 12 und einem daran befestigten Schaft 14 besteht. Der Sockel 10 besteht aus Metall, beispielsweise aus Stahl oder Messing. Der Teller 12 ist scheibenförmig und kann insbesondere kreisrund sein. Der Schaft 14 ist einteilig mit dem Teller 12 hergestellt oder fest mit diesem verbunden und kann ebenfalls einen kreisförmigen Querschnitt aufweisen, insbesondere auch vollständig rotationssymmetrisch ausgebildet sein. Es ist daher möglich, den gesamten Sockel 10 einteilig als Drehteil zu fertigen.

Auf den Schaft 14 aufgesetzt ist ein Schließknopf 16, der in seinem Inneren einen ersten, um eine Drehachse 18 drehbaren Magneten aufweist und zwei Verriegelungselemente, die mit dem ersten Magneten gekoppelt sind, sodass sie durch Drehen des ersten Magneten um die Drehachse 18 von einer Verriegelungsstellung in eine Öffnungsstellung beweglich sind. Diese Elemente befinden sich im Inneren des Schließknopfs 16 und sind in der Figur nicht gezeigt. Die Drehachse 18 fällt mit einer mittig angeordneten Längsachse des Schließknopfs 16 zusammen.

Weiterhin weist der Schließknopf 16 erste Führungsmittel 20 auf, die eine in gleichmäßigem Abstand von der Drehachse 18 umlaufende erste Führungsfläche 22 aufweisen. Die erste Führungsfläche 22 ist eine in der Figur 1 nach oben weisende, d.h. im Gebrauch einem Magnetschlüssel 36 zugewandte Stirnfläche. Sie hat eine relativ geringe Breite und erstreckt sich von einem ersten Abstand von der Drehachse 18 bis zu einem zweiten, geringfügig größeren Abstand davon.

Die erste Führungsfläche 22 läuft wellenförmig in Umfangsrichtung um die Drehachse 18 herum. Sie weist mehrere gegenüber der Drehachse 18 geneigte Abschnitte auf. In der Darstellung erkennbar sind insbesondere zwei erste Wellentäler 24, 26, zwischen denen ein erster Wellenberg 28 angeordnet ist. Ein weiterer erster Wellenberg 30 ist in der Figur rechts von dem ersten Wellental 26 angeordnet. Dieser erste Wellenberg 30 weist eine größere Höhe auf als der erste Wellenberg 28. Zwischen den ersten Wellentälern 24, 26 und den ersten Wellenbergen 28, 30 sind jeweils geneigte Abschnitte angeordnet, deren Steigung in Umfangsrichtung variiert.

Eine obere Fläche 32 und eine untere Fläche 34 des Schließknopfs 16 sind jeweils kreisförmig mit in Richtung der Drehachse 18 verlaufenden Normalen. Insgesamt hat der Schließknopf 16 eine im Wesentlichen kreisscheibenförmige Grundform. Oberhalb des Schließknopfs 16 ist ein Magnetschlüssel 36 dargestellt, der in einem Abstand von dem Schließknopf 16 angeordnet ist. Er weist eine Längsachse 38 auf und ist in der Figur so angeordnet, dass diese Längsachse 38 mit der Drehachse 18 des Schließknopfs 16 entlang einer Geraden ausgerichtet ist.

Der Magnetschlüssel 36 weist einen Kopfabschnitt 40 auf, in dem mindestens ein zweiter, in der Figur nicht dargestellter Magnet angeordnet ist. Die Anordnung des zweiten Magneten ist so gewählt, dass er ein magnetsicheres Feld mit auf einem Kreis um die Längsachse 38 variierender Feldstärke erzeugt, sodass mit dem Magnetschlüssel 36 ein Drehmoment um die Längsachse 38 herum ausgeübt werden kann.

Der Magnetschlüssel weist weiterhin einen Griffabschnitt 42 auf, der sich ebenfalls entlang der Längsachse 38 des Magnetschlüssels erstreckt und einen kreisförmigen Querschnitt aufweist, dessen Durchmesser deutlich geringer ist als der Durchmesser des Kopfabschnitts 40. Zumindest ein äußerer Teil des Kopfabschnitts 40 und der Griffabschnitt 42 bestehen aus Kunststoff und sind einteilig gefertigt, beispielsweise im Spritzgießverfahren.

Am Kopfabschnitt 40 des Magnetschlüssels 36 sind zweite Führungsmittel 44 ausgebildet, die eine zweite Führungsfläche 46 aufweisen. Die zweite Führungsfläche 46 ist eine im Gebrauch dem Schließknopf 16 zugewandte, in der Figur nach unten gerichtete ringscheibenförmige Stirnfläche. Die zweite Führungsfläche 46 ist auf die erste Führungsfläche 22 am Schließknopf 16 abgestimmt ausgebildet und weist zweite Wellenberge und Täler auf. In der Figur erkennbar sind insbesondere zwei zweite Wellentäler 48, 50 und ein zwischen diesen ausgebildeter zweiter Wellenberg 52. Weitere zweite Wellenberge 54, 56 befinden sich in der Figur rechts und links der zweiten Wellentäler 48, 50. Die beiden zweiten Wellenberge 54, 56 weisen eine größere Höhe auf als der zweite Wellenberg 52. Zwischen den genannten zweiten Wellentälern und zweiten Wellenbergen befinden sich jeweils geneigte Abschnitte der zweiten Führungsfläche 46.

Die relative Drehstellung zwischen dem Schließknopf 16 und dem Magnetschlüssel 36 ergibt sich beim Annähern des Magnetschlüssels 36 an den Schließknopf 16 in die voneinander beabstandete Stellung rein zufällig und muss nicht mit Bedacht gewählt werden. Die in der Figur gezeigte relative Drehstellung stellt daher nur eine von vielen Möglichkeiten dar.

Die ersten Führungsmittel 20 und die zweiten Führungsmittel 44 sind so ausgebildet, dass sie, wenn der Magnetschlüssel 36 entlang der Drehachse 18, insbesondere mit seiner Längsachse 38 entlang dieser Drehachse 18, an den Schließknopf 16 herangeführt wird, den Magnetschlüssel 36 und den Schließknopf 16 in eine vorgegebene Drehstellung bezüglich der Drehachse 18 relativ zueinander führen.

Das Ergebnis dieses Führungsvorgangs ist in der Figur 2 dargestellt, in der die ersten Führungsmittel 20 und die zweiten Führungsmittel 44 aneinander anliegen. Die Figur zeigt eine Endstellung des Bewegungsablaufs. In dieser Endstellung hat sich der Schließknopf 16 gegenüber der in der Figur 1 gezeigten Drehstellung relativ zur Drehachse 18 mit seiner in der Figur dem Betrachter zugewandten Seite nach links gedreht, sodass insbesondere der erste Wellenberg 30 in das zweite Wellental 50 eingreift bzw. diesem gegenüberliegt. In der gezeigten Stellung ist außerdem die obere Fläche 32 des Schließknopfs 16 in einer zylindrischen Öffnung des Magnetschlüssels 36 aufgenommen, wie durch die gestrichelte Linie angedeutet.

Die in der Figur 2 gezeigte relative Drehstellung von Schließknopf 16 und Magnetschlüssel 36 zueinander bezüglich der Drehachse 18 führt dazu, dass der in dem Schließknopf 16 angeordnete erste Magnet in eine Drehstellung gelangt, in der die Verriegelungselemente des Schließknopfs 16 in ihre Öffnungsstellung gelangen. Daher kann der Schließknopf 16 ausgehend von der in Figur 2 gezeigten Position einfach nach oben von dem Schaft 14 abgezogen werden, insbesondere gemeinsam mit dem Magnetschlüssel 36.

Bemerkenswert ist, dass es aufgrund der im Ausführungsbeispiel verwirklichten Anordnungen der ersten und zweiten Magneten mehrere vorgegebene Drehstellungen des Schließknopfs 16 relativ zu dem Magnetschlüssel 36 gibt, in denen die Verriegelungselemente des Schließknopfs 16 ihre Öffnungsstellung einnehmen. Eine der insgesamt drei weiteren vorgegebenen Drehstellungen liegt vor, wenn der Magnetschlüssel 36 ausgehend von der in der Figur 2 gezeigten Stellung mit seiner dem Betrachter zugewandten Seite so weit nach rechts gedreht wird, dass sich das zweite Wellental 48 gegenüber dem ersten Wellenberg 30 befindet. Abhängig von der sich zufällig ergebenden, relativen Drehstellung von Schließknopf 16 und Magnetschlüssel 36 bei einer voneinander beabstandeten Anordnung werden Magnetschlüssel 36 und Schließknopf 16 beim Heranführen aneinander in eine Endstellung automatisch, durch das Zusammenwirken der ersten Führungsmittel 20 und der zweiten Führungsmittel 44, in eine der vorgegebenen Drehstellungen geführt, die einer Öffnungsstellung der Verriegelungselemente des Schließknopfs 16 zugeordnet ist.

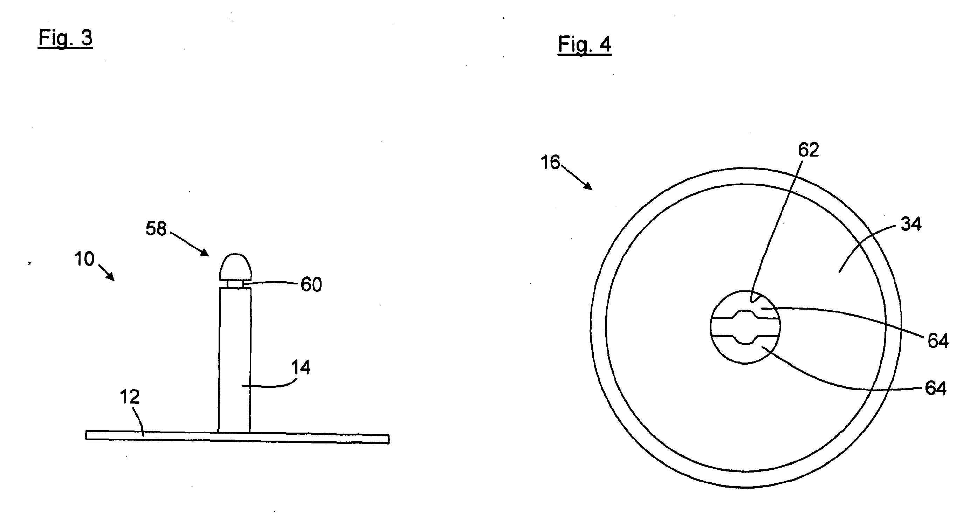

In der Figur 3 ist ein Sockel 10 allein dargestellt. Erkennbar ist, dass ein freies Ende 58 des Schafts einen pilzförmigen Kopf aufweist, mit einem sich beginnend von der Spitze zunächst aufweitenden Durchmesser und einer umlaufenden Vertiefung 60 in Form einer Rille. In diese Vertiefung greifen die Verriegelungselemente des Schließknopfs 16 ein, wenn der Schließknopf 16 auf das freie Ende 58 des Schafts 14 aufgesetzt ist.

Figur 4 zeigt den Schließknopf aus den Figuren 1 und 2 in einer vereinfachten Darstellung von unten. Sichtbar ist die untere Fläche 34, die in ihrer Mitte eine Aufnahme 62 mit kreisförmigem Querschnitt für das freie Ende 58 des Schafts 14 aufweist. Die Aufnahme 62 ist wie eine Sackbohrung geformt. Von zwei gegenüberliegenden Seiten ragt jeweils ein Verriegelungselement 64, das sich in der Figur 4 in einer Verriegelungsstellung befindet, in die Aufnahme 62 hinein. Die Verriegelungselemente 64 sind so geformt, dass sie in die Vertiefung 60 am freien Ende 58 des Schafts 14 eingreifen können, um ein Abziehen des Schließknopfs 16 von dem Schaft 14 zu verhindern.

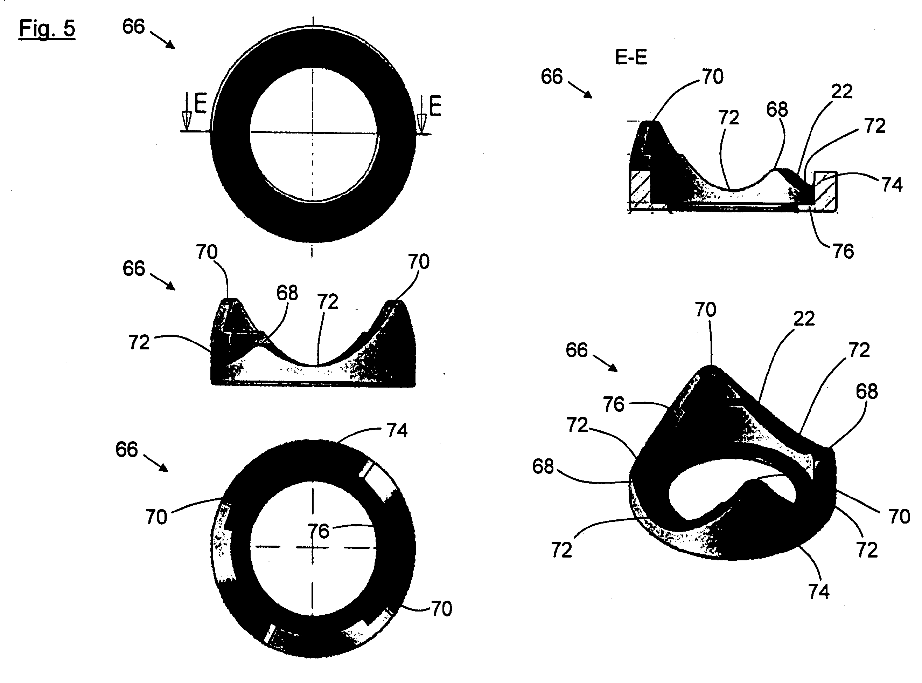

Figur 5 zeigt eine Hülse 66 mit ersten Führungsmitteln 20, die mit einem herkömmlichen Schließknopf verbunden werden kann, um einen erfindungsgemäßen Schließknopf 16 zu erhalten. Es sind fünf unterschiedliche Ansichten der Hülse 66 dargestellt. Oben links eine Ansicht von unten, in der Mitte links eine Ansicht von der Seite, unten links eine Ansicht von oben, oben rechts eine Querschnittsdarstellung entlang der mit E-E bezeichneten Linie und unten rechts eine perspektivische Darstellung.

Die Hülse 66 weist einen zylindermantelförmigen Abschnitt 74 auf, dessen obere Stirnfläche wellenförmig ausgebildet ist und die erste Führungsfläche 22 bildet. Am unteren Ende des zylindermantelförmigen Abschnitts 74 befindet sich ein ringscheibenförmiger Abschnitt 76, dessen äußerer Durchmesser dem Außendurchmesser des zylindermantelförmigen Abschnitts 74 entspricht und dessen Innendurchmesser kleiner ist als der Innendurchmesser des zylindermantelförmigen Abschnitts 74. Dadurch wird innerhalb der Hülse 66 eine Aufnahme für einen ringscheibenförmigen, herkömmlichen Schließknopf gebildet, der in diese eingesetzt und beispielsweise mit der Hülse 66 verklebt werden kann. Dadurch ist eine einfache Nachrüstung herkömmlicher Schließknöpfe mit einer Hülse 66 mit ersten Führungsmitteln 20 möglich.

Weiterhin erkennt man die wellenförmig umlaufende erste Führungsfläche 22 der ersten Führungsmittel 20. Diese weist zwei kleinere erste Wellenberge 68 und zwei größere erste Wellenberge 70 auf, die jeweils bezogen auf eine Längsachse der Hülse 66 gegenüberliegend angeordnet sind. Zwischen den ersten Wellenbergen 68, 70 befindet sich jeweils ein Wellental 72. Auch die Wellentäler 72 liegen einander paarweise gegenüber.

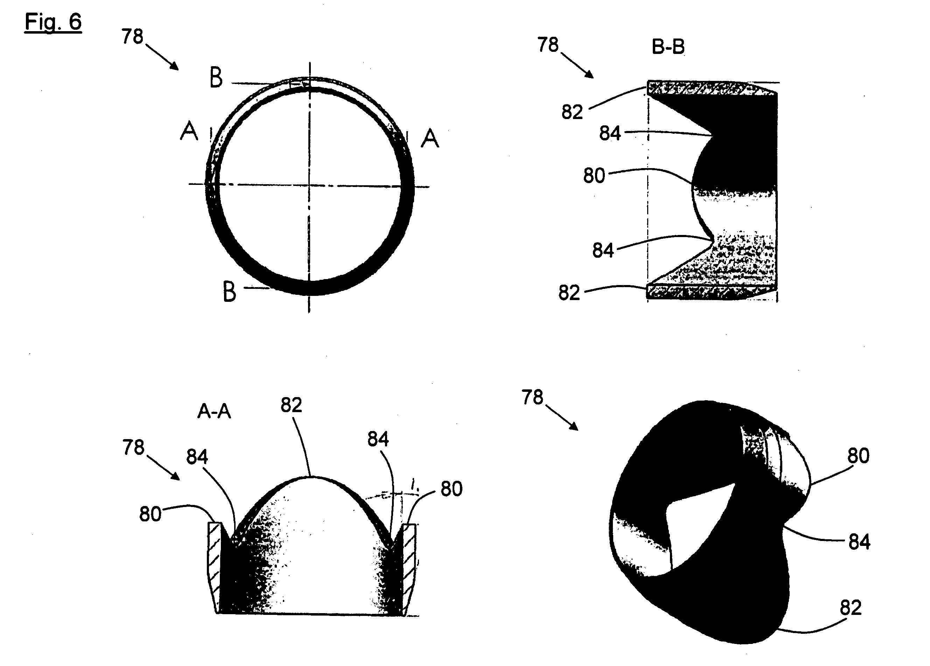

Figur 6 zeigt vier Ansichten einer Hülse 78 mit zweiten Führungsmitteln. Oben links ist eine Ansicht von unten gezeigt, unten rechts eine perspektivische Darstellung, oben rechts ein Schnitt entlang der Linie B-B, unten links ein Schnitt entlang der Linie A-A. Die Hülse 78 hat eine zylindermantelförmige Grundform, wobei die in der Darstellung oben rechts zur linken Seite weisende Stirnfläche des zylindermantelförmigen Abschnitts wellenförmig ausgebildet ist mit niedrigeren, zweiten Wellenbergen 80 und höheren, zweiten Wellenbergen 82. Zwischen den zweiten Wellenbergen 80, 82, die jeweils einander gegenüberliegend ausgebildet sind, befinden sich jeweils zweite Wellentäler 84.

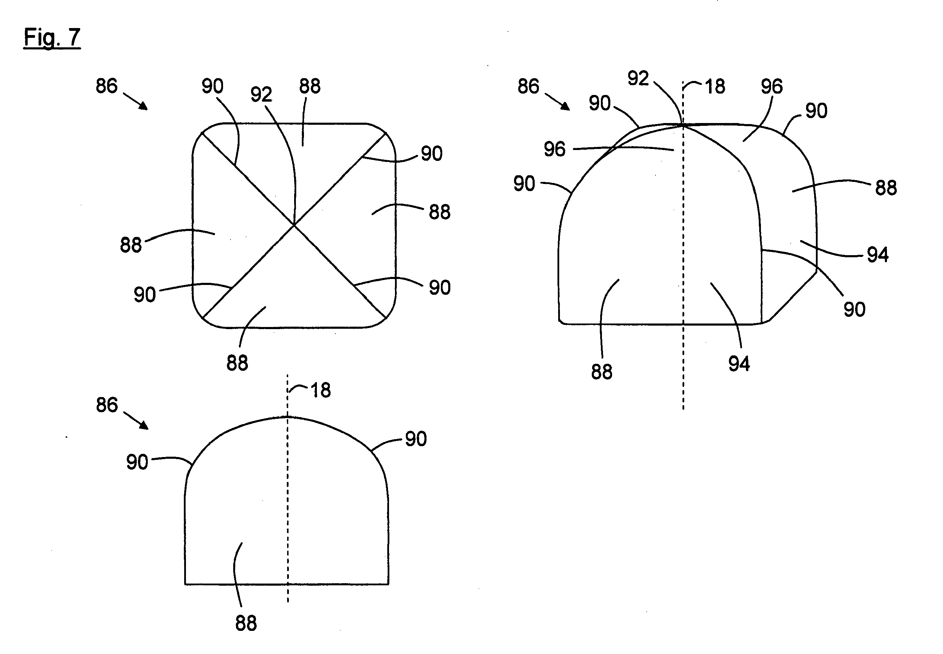

Figur 7 zeigt ein weiteres Beispiel eines Schließknopfs 86, bei dem die ersten Führungsmittel in Form von Seitenflächen 88 und Seitenkanten 90 verwirklicht sind. Oben links ist eine Ansicht von oben, unten links eine Ansicht von der Seite und oben rechts eine perspektivische Ansicht gezeigt. Der Schließknopf 86 hat über seine gesamte Länge entlang der Drehachse 18 einen quadratischen Querschnitt mit abgerundeten Ecken, wie am besten in der oben links dargestellten Ansicht von oben zu erkennen ist. In einem unteren Abschnitt 94 sind die Seitenflächen 88 senkrecht zu einer bezogen auf die Drehachse 18 radialen Richtung ausgerichtet, verlaufen also in einem Abstand von und parallel zu der Drehachse 18. Im weiteren Verlauf nach oben weisen die Seitenflächen 88 eine Krümmung zur Drehachse 18 hin auf, wobei ein oberer Abschnitt 96 der Seitenflächen 88 annähernd in einem rechten Winkel zur Drehachse 18 angeordnet ist, so dass eine Spitze 92 in dem Punkt, wo alle vier Seitenflächen 88 und Seitenkanten 90 zusammenlaufen, sehr flach ausgebildet bzw. fast vollständig abgerundet ist.

Ein zu dem Schließknopf 86 passender Magnetschlüssel (nicht dargestellt) kann insbesondere einen Schließknopf-Aufnahmeabschnitt aufweisen, der komplementär zu dem Schließknopf 86 ausgebildet ist.

### Liste der verwendeten Bezugszeichen:

- 10: Sockel
- 12: Teller
- 14: Schaft
- 16: Schließknopf
- 18: Drehachse
- 20: Erste Führungsmittel
- 22: Erste Führungsfläche
- 24, 26: Erste Wellentäler
- 28: Niedriger, erster Wellenberg
- 30: Höherer, erster Wellenberg
- 32: Obere Fläche des Schließknopfs
- 34: Untere Fläche des Schließknopfs
- 36: Magnetschlüssel
- 38: Längsachse des Magnetschlüssels
- 40: Kopfabschnitt
- 42: Griffabschnitt
- 44: Zweite Führungsmittel
- 46: Zweite Führungsfläche
- 48, 50: Zweite Wellentäler
- 52: Niedrigerer, zweiter Wellenberg
- 54, 56: Höhere, zweite Wellenberge
- 58: Freies Ende des Schafts
- 60: Vertiefung
- 62: Aufnahme
- 64: Verriegelungselement
- 66: Hülse mit ersten Führungsmitteln
- 68: Niedrigere, erste Wellenberge
- 70: Höhere, erste Wellenberge
- 72: Wellentäler
- 74: Zylindermantelförmiger Abschnitt
- 76: Ringscheibenförmiger Abschnitt
- 78: Hülse mit zweiten Führungsmitteln
- 80: Niedrigere, zweite Wellenberge
- 82: Höhere, zweite Wellenberge
- 84: Zweite Wellentäler
- 86: Schließknopf
- 88: Seitenflächen
- 90: Seitenkanten
- 92: Spitze
- 94: Unterer Abschnitt der Seitenflächen
- 96: Oberer Abschnitt der Seitenflächen

## Patentansprüche

1. Schließknopf (16) für ein mit einem Magnetschlüssel (36) zu öffnendes Magnetschloss mit
• mindestens einem ersten Magneten, der um eine Drehachse (18) drehbar in dem Schließknopf (16) gelagert ist, und
• mindestens einem Verriegelungselement (64), das mit dem mindestens einen ersten Magneten gekoppelt ist, so dass es durch Drehen des mindestens einen ersten Magneten um die Drehachse (18) von einer Verriegelungsstellung in eine Öffnungsstellung beweglich ist, **dadurch gekennzeichnet, dass**
• der Schließknopf (16) erste Führungsmittel (20) aufweist, die so ausgebildet sind, dass sie, wenn ein zu dem Schließknopf (16) passender, zweite Führungsmittel (44) aufweisender Magnetschlüssel (36) entlang der Drehachse (18) bis in eine Endstellung an den Schließknopf (16) herangeführt wird, den Magnetschlüssel (36) und den Schließknopf (16) in eine vorgegebene Drehstellung bezüglich der Drehachse (18) relativ zueinander führen.

2. Schließknopf (16) nach Anspruch 1, **dadurch gekennzeichnet, dass** die ersten Führungsmittel (20) mindestens eine erste Führungsfläche (22) oder -kante aufweisen, die mindestens einen Abschnitt aufweist, der in einem Abstand von der Drehachse (18) angeordnet ist und eine die Drehachse (18) einschließende Längsebene und eine senkrecht zur Drehachse (18) angeordnete Querebene jeweils unter einem von 90° verschiedenen Winkel schneidet.

3. Schließknopf (16) nach Anspruch 2, **dadurch gekennzeichnet, dass** die mindestens eine erste Führungsfläche (22) oder -kante in Umfangsrichtung um die Drehachse (18) wellenförmig umläuft.

4. Schließknopf (16) nach einem der Ansprüche 1 bis 3, **dadurch gekennzeichnet, dass** die ersten Führungsmittel erste Seitenflächen (88) und/oder -kanten (90) aufweisen, die mindestens an einem Längsabschnitt des Schließknopfs (16) mit vieleckigem Querschnitt ausgebildet sind.

5. Schließknopf (16) nach einem der Ansprüche 1 bis 4 kombiniert mit einem Sockel (10), der einen Teller (12) und einen daran befestigten Schaft (14) aufweist, dessen freies Ende (58) in eine Aufnahme (62) des Schließknopfs (16) einsetzbar ist, wobei im eingesetzten Zustand das mindestens eine Verriegelungselement (64) in seiner Verriegelungsposition in die Aufnahme (62) hineinragt und ein Entfernen des Schließknopfs (16) von dem Schaft (14) verhindert, **dadurch gekennzeichnet, dass** der Schaft (14) im eingesetzten Zustand gegenüber dem Schließknopf (16) drehbar ist.

6. Magnetschlüssel (36) für ein einen Schließknopf (16) aufweisendes Magnetschloss mit
• mindestens einem zweiten Magneten, der so angeordnet ist, das er ein magnetisches Feld mit auf einem Kreis um eine Längsachse (38) des Magnetschlüssels (36) variierender Feldstärke erzeugt, **dadurch gekennzeichnet, dass**
• der Magnetschlüssel (36) zweite Führungsmittel (44) aufweist, die so ausgebildet sind, dass sie, wenn der Magnetschlüssel (36) bis in eine Endstellung an einen passenden, erste Führungsmittel (20) aufweisenden Schließknopf (16) entlang der Längsachse (38) herangeführt wird, den Magnetschlüssel (36) und den Schließknopf (16) in eine vorgegebene Drehstellung bezüglich der Längsachse (38) relativ zueinander führen.

7. Magnetschlüssel (36) nach Anspruch 6, **dadurch gekennzeichnet, dass** der Magnetschlüssel (36) einen Kopfabschnitt (40), der den mindestens einen zweiten Magneten enthält, und einen in Richtung der Längsachse (38) verlaufenden Griffabschnitt (42) aufweist, der gegenüber dem Kopfabschnitt (40) drehbar gelagert ist und/oder einen geringeren Durchmesser als der Kopfabschnitt (40) aufweist.

8. Magnetschlüssel (36) nach Anspruch 6 oder 7, **dadurch gekennzeichnet, dass** die zweiten Führungsmittel (44) mindestens eine zweite Führungsfläche (46) oder -kante aufweisen, die mindestens einen Abschnitt aufweist, der in einem Abstand von der Längsachse (38) angeordnet ist und eine die Längsachse (38) einschließende Längsebene und eine senkrecht zur Längsachse (38) angeordnete Querebene jeweils unter einem von 90° verschiedenen Winkel schneidet.

9. Magnetschlüssel (36) nach Anspruch 8, **dadurch gekennzeichnet, dass** die mindestens eine zweite Führungsfläche (46) oder -kante in Umfangsrichtung um die Längsachse (38) wellenförmig umläuft.

10. Magnetschlüssel (36) nach einem der Ansprüche 6 bis 9, **dadurch gekennzeichnet, dass** die zweiten Führungsmittel (44) zweite Seitenflächen und/oder -kanten aufweisen, die an einem Innenumfang eines Schließknopf-Aufnahmeabschnitts des Magnetschlüssels (36) mit mindestens in einem Längsabschnitt vieleckigem Querschnitt ausgebildet sind.

11. System mit
• einem Schließknopf (16), der mindestens einen ersten Magneten, der um eine Drehachse (18) drehbar in dem Schließknopf (16) gelagert ist, und mindestens ein Verriegelungselement (64) aufweist, das mit dem mindestens einen ersten Magneten gekoppelt ist, so dass es durch Drehen des mindestens einen ersten Magneten um die Drehachse (18) von einer Verriegelungsstellung in eine Öffnungsstellung beweglich ist, und
• einem Magnetschlüssel (36), der mindestens einen zweiten Magneten aufweist, der so angeordnet ist, das er ein magnetisches Feld mit auf einem Kreis um eine Längsachse (38) des Magnetschlüssels (36) variierender Feldstärke erzeugt, **dadurch gekennzeichnet, dass**
• der Schließknopf (16) erste Führungsmittel (20) und der Magnetschlüssel (36) zweite Führungsmittel (44) aufweist, wobei die ersten Führungsmittel (20) und die zweiten Führungsmittel (44) so ausgebildet sind, dass sie, wenn der Magnetschlüssel (36) entlang der Längsachse (38) bis in eine Endstellung an den Schließknopf (16) herangeführt wird, den Magnetschlüssel (36) und den Schließknopf (16) in eine vorgegebene Drehstellung bezüglich der Längsachse (38) relativ zueinander führen.

12. System nach Anspruch 11, **dadurch gekennzeichnet, dass** die ersten Führungsmittel (20) und/oder die zweiten Führungsmittel (44) so ausgebildet sind, dass sie einen Mittelpunkt des vorderen Endes des Magnetschlüssels (36) bei der Bewegung in die Endstellung zu der Drehachse (18) des Schließknopfs hin führen.

13. System nach Anspruch 12, **dadurch gekennzeichnet, dass** die ersten Führungsmittel (20) und/oder die zweiten Führungsmittel (44) so ausgebildet sind, dass sie die Längsachse (38) bei der Bewegung in die Endstellung parallel zu der Drehachse (18) ausrichten.

14. System nach einem der Ansprüche 11 bis 13, **dadurch gekennzeichnet, dass** mindestens eine Drehstellung von Schließknopf (16) und Magnetschlüssel (36) bezüglich der Längsachse (38) relativ zu einander energetisch bevorzugt ist, wenn Schließknopf (16) und Magnetschlüssel (36) entlang der Längsachse (38) ausgerichtet sind und sich in einem Abstand voneinander befinden, und dass die ersten und zweiten Führungsmittel (20, 44) so aufeinander abgestimmt sind, dass sie ausgehend von dieser energetisch bevorzugten relativen Drehstellung beim Heranführen des Magnetschlüssels (36) an den Schließknopf (16) eine Drehung von Magnetschlüssels (36) und Schließknopf (16) relativ zueinander bewirken.

15. System nach einem der Ansprüche 11 bis 14, **dadurch gekennzeichnet, dass** die ersten Führungsmittel (20) und/oder die zweiten Führungsmittel (44) so ausgebildet sind, dass sie den Magnetschlüssel (36) und den Schließknopf (16) in eine von mehreren vorgegebenen Drehstellungen führen, in der sich das mindestens eine Verriegelungselement (64) in seine Öffnungsstellung bewegt.

16. System nach einem der Ansprüche 11 bis 15, **dadurch gekennzeichnet, dass** sich die mehreren vorgegebenen Drehstellungen in gleichmäßigen Winkelabständen befinden.

17. System nach einem der Ansprüche 11 bis 16, **dadurch gekennzeichnet, dass** die ersten Führungsmittel (20) eine wellenförmig um die Drehachse (18) umlaufende erste Führungsfläche (22) oder -kante mit mindestens einem ersten Wellenberg (68, 70) und mindestens einem ersten Wellental (72) und die zweiten Führungsmittel (44) eine wellenförmig um die Längsachse (38) umlaufende zweite Führungsfläche (46) oder -kante mit mindestens einem zweiten Wellenberg (80, 82) und mindestens einem zweiten Wellental (84) aufweisen, wobei in der vorgegebenen Drehstellung das mindestens eine erste Wellental (72) dem mindestens einen zweiten Wellenberg (80, 82) und der mindestens eine erste Wellenberg (68, 70) dem mindestens einen zweiten Wellental (84) gegenüberliegt.

## Claims

1. A closing button (16) for a magnetic lock to be opened with a magnetic key (36) with
- at least one first magnet, which is pivot-mounted around a rotational axis (18) in the closing button (16), and
- at least one locking element (64), which is coupled with the at least one first magnet so that it is moveable around the rotational axis (18) from a locking position into an opening position by turning the at least one first magnet, **characterized in that**
- the closing button (16) has first guide means (20), which are designed such that they guide the magnetic key (36) and the closing button (16) into a specified rotational position with respect to the rotational axis (18) relative to each other when a magnetic key (36) fitting the closing button (16) and having second guide means (44) is led along the rotational axis (18) up to an end position on the closing button (16).

2. The closing button (16) according to claim 1, **characterized in that** the first guide means (20) have at least one first guide surface (22) or edge, which has at least one section, which is arranged at a distance from the rotational axis (18) and cuts a longitudinal plane including the rotational axis (18) and a transversal plane arranged perpendicular to the rotational axis (18) respectively at an angle that does not equal 90°.

3. The closing button (16) according to claim 2, **characterized in that** the at least one first guide surface (22) or edge in the circumferential direction runs around the rotational axis (18) in a wave-like manner.

4. The closing button (16) according to one of claims 1 through 3, **characterized in that** the first guide means has first side surfaces (88) and/or edges (90), which are designed at least on a longitudinal section of the closing button (16) with a polygonal cross-section.

5. The closing button (16) according to one of claims 1 through 4 combined with a base (10), which has a plate (12) and shaft (14) fastened on it, the free end (58) of which is insertable into a recess (62) of the closing button (16), wherein, in the inserted state, the at least one locking element (64) in its locking position extends into the recess (62) and prevents removal of the closing button (16) from the shaft (14), **characterized in that** the shaft (14) is rotatable in the inserted state with respect to the closing button (16).

6. A magnetic key (36) for a magnetic lock having a closing button (16) with
- at least one second magnet, which is arranged such that it generates a magnetic field with field strength varying on a circle around a longitudinal axis (38) of the magnetic key, **characterized in that**
- the magnetic key (36) has second guide means (44), which are designed such that they guide the magnetic key (36) and the closing button (16) into a specified rotational position with respect to the longitudinal axis (38) relative to each other when the magnetic key (36) is led up to into an end position on a fitting closing button (16) having first guide means (20) along the longitudinal axis (38).

7. The magnetic key (36) according to claim 6, **characterized in that** the magnetic key (36) has a head section (40), which contains the at least one second magnet, and a handle section (42) running in the direction of the longitudinal axis (38), which is pivot-mounted with respect to the head section (40) and/or has a smaller diameter than the head section (40).

8. The magnetic key (36) according to claim 6 or 7, **characterized in that** the second guides means (44) have at least a second guide surface (46) or edge, which has at least one section, which is arranged at a distance from the longitudinal axis (38) and cuts a longitudinal plane including the rotational axis (38) and a transversal plane arranged perpendicular to the longitudinal axis (38) respectively at an angle that does not equal 90°.

9. The magnetic key (36) according to claim 8, **characterized in that** the at least one second guide surface (46) or edge in the circumferential direction runs around the longitudinal axis (38) in a wave-like manner.

10. The magnetic key (36) according to one of claims 6 through 9, **characterized in that** the second guide means (44) have second side surfaces and/or edges, which are designed on an inner circumference of a closing button receiving section of the magnetic key (36) with a polygonal cross-section at least in a longitudinal cross-section.

11. A system with
- a closing button (16), which has at least one first magnet, which is pivot-mounted around a rotational axis (18) in the closing button (16), and at least one locking element (64), which is coupled with the at least one first magnet so that it is moveable from a locking position into an opening position by turning the at least one first magnet around the rotational axis (18), and
- a magnetic key (36), which has at least one second magnet, which is arranged such that it generates a magnetic field with a field strength varying on a circle around a longitudinal axis (38) of the magnetic key (36), **characterized in that**
- the closing button (16) has first guide means (20) and the magnetic key (36) second guide means, wherein the first guide means (20) and the second guide means (44) are designed such that they guide the magnetic key (36) and the closing button (16) into a specified rotational position with respect to the longitudinal axis (38) relative to each other when the magnetic key (36) is led along the longitudinal axis (38) up to into an end position on the closing button (16).

12. The system according to claim 11, **characterized in that** the first guide means (20) and/or the second guide means (44) are designed such that they guide a middle point of the front end of the magnetic key (36) during the movement into the end position towards the rotational axis (18) of the closing button.

13. The system according to claim 12, **characterized in that** the first guide means (20) and/or the second guide means (44) are designed such that they align the longitudinal axis (38) parallel to the rotational axis (18) during the movement into the end position.

14. The system according to one of claims 11 through 13, **characterized in that** at least one rotational position of the closing button (16) and the magnetic key (36) with respect to the longitudinal axis (38) is preferred relative to each other energetically when the closing button (16) and the magnetic key (36) are aligned along the longitudinal axis (38) and are located at a distance to each other and **in that** the first and second guide means (20, 44) are adjusted with respect to each other so that they cause a rotation of the magnetic key (36) and the closing button (16) relative to each other starting from this energetically preferred relative rotational position when the magnetic key (36) is led to the closing button (16).

15. The system according to one of claims 11 through 14, **characterized in that** the first guide means (20) and/or the second guide means (44) are designed such that they guide the magnetic key (36) and the closing button (16) into one of several specified rotational positions, in which the at least one locking element (64) moves into its opening position.

16. The system according to one of claims 11 through 15, **characterized in that** the several specified rotational positions are located at even angular distances.

17. The system according to one of claims 11 through 16, **characterized in that** first guide means (20) have a first guide surface (22) or edge running in a wave-like manner around the rotational axis (18) with at least one first wave crest (68, 70) and at least one first wave trough (72) and the second guide means (44) have a second guide surface (46) or edge running in a wave-like manner around the longitudinal axis (38) with at least one second wave crest (80, 82) and at least one second wave trough (84), wherein, in the specified rotational position, the at least one first wave trough (72) lies opposite the at least one second wave crest (80, 82) and the at least one first wave crest (68, 70) lies opposite the at least one second wave trough (84).

## Revendications

1. Bouton de fermeture (16) pour une serrure magnétique destinée à être ouverte avec une clé magnétique (36), avec
• au moins un premier aimant qui est logé dans le bouton de fermeture (16) de manière à être rotatif autour d'un axe de rotation (18), et
• au moins un élément de verrouillage (64) qui est couplé avec le au moins un premier aimant de manière à pouvoir être amené d'une position de verrouillage à une position d'ouverture en tournant le au moins un premier aimant autour de l'axe de rotation (18), **caractérisé en ce que**
• le bouton de fermeture (16) présente des premiers moyens de guidage (20) qui sont formés de manière à ce que, quand une clé magnétique (36) présentant des deuxièmes moyens de guidage (44) adaptée au bouton de fermeture (16) est approchée le long de l'axe de rotation (18) d'une position finale située sur le bouton de fermeture (16), ils conduisent la clé magnétique (36) et le bouton de fermeture (16) à une position rotative prédéfinie par rapport à l'axe de rotation (18) et l'un par rapport à l'autre.

2. Bouton de fermeture (16) selon la revendication 1, **caractérisé en ce que** les premiers moyens de guidage (20) présentent au moins une première surface de guidage (22) ou arête de guidage présentant au moins une section disposée à une distance de l'axe de rotation (18) et coupant respectivement en angle différent de 90° un plan longitudinal incluant l'axe de rotation (18) et un plan transversal disposé verticalement par rapport à l'axe de rotation (18).

3. Bouton de fermeture (16) selon la revendication 2, **caractérisé en ce que** la au moins une première surface de guidage (22) ou arête de guidage court dans le sens circonférentiel, sous forme ondulée, autour de l'axe de rotation (18).

4. Bouton de fermeture (16) selon l'une quelconque des revendications 1 à 3, **caractérisé en ce que** les premiers moyens de guidage présentent des premières surfaces latérales (88) et/ou arêtes latérales (90) formées au moins à une section longitudinale du bouton de fermeture (16) avec une coupe transversale polygonale.

5. Bouton de fermeture (16) selon l'une quelconque des revendications 1 à 4, combiné à un socle (10) présentant un plateau (12) et une queue (14), qui y est fixée, dont l'extrémité libre (58) peut être introduite dans un logement (62) du bouton de fermeture (16), le au moins un élément de verrouillage (64), étant introduit, faisant saillie à sa position de verrouillage dans le logement (62) et empêchant que le bouton de fermeture (16) puisse être détaché de la queue (14), **caractérisé en ce que** la queue (14) est, à l'état introduit, rotative par rapport au bouton de fermeture (16).

6. Clé magnétique (36) pour une serrure magnétique présentant un bouton de fermeture (16), avec
• au moins un deuxième aimant disposé de manière à générer un champ magnétique d'intensité de champ variable sur un cercle autour d'un axe longitudinal (38) de la clé magnétique (36), **caractérisée en ce que**
• la clé magnétique (36) présente des deuxièmes moyens de guidage (44) formés de manière à ce que, lorsque la clé magnétique (36) est approchée le long de l'axe longitudinal (38) d'une position finale située sur un bouton de fermeture (16) approprié présentant des premiers moyens de guidage (20), ils conduisent la clé magnétique (36) et le bouton de fermeture (16) à une position rotative prédéfinie par rapport à l'axe longitudinal (38) et l'un par rapport à l'autre.

7. Clé magnétique (36) selon la revendication 6, **caractérisée en ce que** la clé magnétique (36) présente une section de tête (40) contenant le au moins un deuxième aimant, et présente une section de prise (42) qui court en direction de l'axe longitudinal (38) et est sur palier rotatif par rapport à la section de tête (40) et/ou présente un diamètre inférieur à celui de la section de tête (40).

8. Clé magnétique (36) selon la revendication 6 ou 7, **caractérisée en ce que** les deuxièmes moyens de guidage (44) présentent au moins une deuxième surface de guidage (46) ou arête de guidage présentant au moins une section disposée à une distance de l'axe longitudinal (38) et coupant respectivement en angle différent de 90° un plan longitudinal incluant l'axe longitudinal (38) et un plan transversal disposé verticalement par rapport à l'axe longitudinal (38).

9. Clé magnétique (36) selon la revendication 8, **caractérisée en ce que** la au moins une deuxième surface de guidage (46) ou arête de guidage court dans le sens circonférentiel, sous forme ondulée, autour de l'axe longitudinal (38).

10. Clé magnétique (36) selon l'une quelconque des revendications 6 à 9, **caractérisée en ce que** les deuxièmes moyens de guidage présentent des deuxièmes surfaces latérales et/ou arêtes latérales formées sur une circonférence intérieure d'une section de logement de bouton de fermeture de la clé magnétique (36) avec une coupe transversale polygonale sur au moins une section longitudinale.

11. Système avec
• un bouton de fermeture (16) qui présente au moins un premier aimant logé de manière à être rotatif autour d'un axe de rotation (18) dans le bouton de fermeture (16) et au moins un élément de verrouillage (64) qui est couplé avec le au moins un premier aimant de manière à pouvoir être amené d'une position de verrouillage à une position d'ouverture en tournant le au moins un premier aimant autour de l'axe de rotation (18), et
• une clé magnétique (36) présentant au moins un deuxième aimant disposé de manière à générer un champ magnétique d'intensité de champ variable sur un cercle autour d'un axe longitudinal (38) de la clé magnétique (36), **caractérisé en ce que**
• le bouton de fermeture (16) présente des premiers moyens de guidage (20) et la clé magnétique (36) présente des deuxièmes moyens de guidage (44), les premiers moyens de guidage (20) et les deuxièmes moyens de guidage (44) étant formés de manière à ce que, lorsque la clé magnétique (36) est approchée le long de l'axe longitudinal (38) d'une position finale située sur le bouton de fermeture (16), ils conduisent la clé magnétique (36) et le bouton de fermeture (16) à une position rotative prédéfinie par rapport à l'axe longitudinal (38) et l'un par rapport à l'autre.

12. Système selon la revendication 11, **caractérisé en ce que** les premiers moyens de guidage (20) et/ou les deuxièmes moyens de guidage (44) sont formés de manière à conduire un point central de l'extrémité avant de la clé magnétique (36), lors du mouvement vers la position finale, vers l'axe de rotation (18) du bouton de fermeture.

13. Système selon la revendication 12, **caractérisé en ce que** les premiers moyens de guidage (20) et/ou les deuxièmes moyens de guidage (44) sont formés de manière à orienter l'axe longitudinal (38), lors du mouvement vers la position finale, parallèlement à l'axe de rotation (18).

14. Système selon l'une quelconque des revendications 11 à 13, **caractérisé en ce qu'**au moins une position rotative du bouton de fermeture (16) et de la clé magnétique (36) par rapport à l'axe longitudinal (38) et l'un par rapport à l'autre est préférée du point de vue énergétique lorsque le bouton de fermeture (16) et la clé magnétique (36) sont orientés le long de l'axe longitudinal (38) et se trouvent à une certaine distance l'un de l'autre, et **en ce que** les premiers et deuxièmes moyens de guidage (20, 44) sont adaptés l'un à l'autre de manière à ce que, partant de cette position rotative préférée du point de vue énergétique lorsqu'on approche la clé magnétique (36) du bouton de fermeture (16), ils entraînent une rotation de la clé magnétique (36) et du bouton de fermeture (16) l'un par rapport à l'autre.

15. Système selon l'une quelconque des revendications 11 à 14, **caractérisé en ce que** les premiers moyens de guidage (20) et/ou les deuxièmes moyens de guidage (44) sont formés de manière à conduire la clé magnétique (36) et le bouton de fermeture (16) à une position rotative prédéfinie, parmi plusieurs, à laquelle le au moins un élément de verrouillage (64) se déplace à la position d'ouverture.

16. Système selon l'une quelconque des revendications 11 à 15, **caractérisé en ce que** les plusieurs positions rotatives prédéfinies se trouvent à des écarts angulaires uniformes.

17. Système selon l'une quelconque des revendications 11 à 16, **caractérisé en ce que** les premiers moyens de guidage (20) présentent une première surface de guidage (22) ou arête de guidage circulant de manière ondulée autour de l'axe de rotation (18) avec au moins un premier sommet (68, 70) et au moins un premier creux d'onde (72) et les deuxièmes moyens de guidage (44) une deuxième surface de guidage (46) ou arête de guidage circulant de manière ondulée autour de l'axe longitudinal (38) avec au moins un deuxième sommet (80, 82) et au moins un deuxième creux d'onde (84), le au moins un premier creux d'onde (72) étant situé en face du au moins un deuxième sommet (80, 82) et le au moins un premier sommet (68, 70) étant situé en face du au moins un deuxième creux d'onde (84) à la position rotative prédéfinie.
